# EUROPÄISCHE PATENTSCHRIFT

(11) **EP 1 700 927 B1**
(45) Veröffentlichungstag und Bekanntmachung des Hinweises auf die Patenterteilung: **04.05.2011**
(21) Anmeldenummer: 05112923.7
(22) Anmeldetag: 23.12.2005
(51) Int. Cl.: C23C 4/10, C23C 4/12

(54) **Plasmagespritzte Schichten aus Aluminiumoxid**
Plasma-sprayed alumina layers
Couches d'alumine déposées par jet de plasma

(30) Priorität: 09.03.2005 EP 05005097
(43) Veröffentlichungstag der Anmeldung: 13.09.2006
(73) Patentinhaber: Evonik Degussa GmbH, 45128 Essen (DE)
(72) Erfinder: Clasen, Rolf, Prof., 66386 St. Ingbert (DE); Deller, Klaus, Dr., 63512 Hainburg (DE); Deng, Yi, Dr., 63452 Hanau (DE); Fehringer, Georg, 66119 Saarbrücken (DE); Oswald, Monika, Dr., 63454 Hanau (DE)

(56) Entgegenhaltungen:
- WO-A-02/092525
- WO-A-2004/016821
- US-A1- 2003 077 398
- US-A1- 2003 108 680
- US-B1- 6 723 387
- VARATHARAJAN K ET AL: "Synthesis of nanocrystalline alpha-Al2O3 by ultrasonic flame pyrolysis" MATERIALS RESEARCH BULLETIN, ELSEVIER, KIDLINGTON, GB, Bd. 38, Nr. 4, 24. März 2003 (2003-03-24), Seiten 577-583, XP004417137 ISSN: 0025-5408

## Beschreibung

Die Erfindung betrifft plasmagespritzte Schichten aus Aluminiumoxid auf einem Substrat sowie ein Verfahren zur Herstellung von plasmagespritzten Schichten aus Aluminiumoxid.

Plasmagespritzte Schichten aus Aluminiumoxid werden verwendet, um Bauteile von Schiffen und Flugzeugen vor Korrosion oder Verschleiß zu schützen (Herbert Hermann, Spektrum der Wissenschaft, November 1988, Seite 102).Diese Aluminiummischoxidschichten weisen Risse auf. Es ist weiterhin bekannt, Aluminiumoxidschichten mittels des Plasmasprühverfahrens herzustellen (S. Jiansirisomboon et al., Journal of the European Ceramic Socicty 23, (2003) 961 - 976). Auch diese Schichten weisen Risse auf.

Es ist bekannt, plasmagespritzte Schichten aus Aluminiumoxid aus mikrometerskaligen Pulvern herzustellen. Die Porengrößen können dabei in dem Bereich von 20 bis 40 µm liegen.

Es ist bekannt, aus nanoskaligem A1203/Ti02-Pulvern Beschichtungen mittels des Plasmaverfahrens herzustellen (US 6, 723, 387).

Hierzu ist es bekannt, nanoskaliges Aluminiumoxidpulver mittels der Chemical Vapor Condensation (CVC) herzustellen. Dabei wird die Vorstufe zusammen mit dem Tragegasstrom an einer heißen Wand oder in einem Flammenreaktor umgesetzt (US 6,723,387). Die dort verwendeten Reaktoren werden in den Dokumenten US 5,514,350 und US 5,876,683 beschrieben.

Gemäß US 5,514,350 werden nicht-agglomerierte nanostrukturierte (n-ceramic) Pulver aus metallorganischen Vorstufen hergestellt, indem man die metallorganischen Vorstufen in einem Tragegasstrom in einem heißen Wirbelbettreaktor thermisch zersetzt. Insbesondere werden aus Hexamethyldisiloxan Pulver der Formel n-SiCxN₄ erhalten.

Das Dokument beschreibt kein pyrogenes Verfahren, bei dem verdampfbare Metalloxid/Metallverbindungen in der Wasserstoff-Sauerstoff-Flamme zu den reinen Oxiden hydrolysiert werden.

Gemäß US 5,876,683 werden nicht-agglomerierte oxidische Pulver in der Größe von Nanopartikel hergestellt, indem man eine verdampfte metallorganische Verbindung mit einem sauerstoffenthaltenden Brenngasstrom vermischt, diesen Gasstrom einer Flamme zuführt und dort verbrennt, wobei in der Reaktionskammer ein Druck von 1 bis 50 mbar eingehalten wird.

Die erzeugten nicht-agglomerierten Oxide können auf einer gekühlten Walze oder direkt, wenn die Flamme als Plasmaflamme gestaltet wird, auf einem Substrat aufgetragen werden, wobei eine feste Schicht auf dem Substrat gebildet wird.

Es ist weiterhin bekannt, nanostrukturiertes Aluminiumoxid, das mittels der CVC-Methode in einem Heisswandreaktor hergestellt wurde, in einer organischen Flüssigkeit zu suspendieren und diese Suspension mittels des Plasmaspritzverfahrens zu verarbeiten (US 2003/0077398 A1).

Es ist weiterhin bekannt, mechanisch stabile, rißfreie, durch Flammspritzen erzeugte Schichten aus Aluminiumoxid von einer Dicke von 50 bis 1000 µm herzustellen, um die Stabilität von Bauteilen aus Quarz, wie zum Beispiel Quarztiegeln, zu erhöhen. Angaben zu der Struktur der Al₂O₃-Schicht werden nicht gemacht (WO 02/092525 A1).

Es ist weiterhin bekannt, ein amorphes Material mittels des Plasmaspritzens herzustellen, indem man Aluminiumoxid im Gemisch mit anderen Oxiden dem Plasma zuführt (WO 2004/016821).

Die bekannten Al₂O₃-Schichten können nachteiligerweise Defekte, wie Poren und Risse aufweisen. Diese Restporosität kann sich negativ auf die Mikrohärte und die Verschleißbeständigkeit auswirken.

Es besteht somit die Aufgabe, plasmagespritzte Schichten aus Aluminiumoxid herzustellen, die ein Minimum an Defekten, wie Risse und Poren innerhalb der Schicht, und eine hohe Verschleißbeständigkeit aufweisen.

Gegenstand der Erfindung ist ein Verfahren zur Herstellung einer plasmagespritzten Schicht aus Aluminiumoxid auf einem Substrat, worin die Partikel des Aluminiumoxides in der Schicht eine Größe von 20 bis 30 nm (Nanometer) aufweisen und überwiegend in der α-Phase vorliegen, wobei zur Herstellung der plasmagespritzten Schichten ein pyrogen hergestelltes Aluminiumoxid mit einem mittleren Teilchendurchmesser von 5,0 bis 150 µm und einer Stampfdichte von 300 bis 1200 g/l eingesetzt wird, welches hergestellt wird, indem pyrogen hergestelltes Aluminiumoxid in Wasser dispergiert und dann getrocknet wird.

Die erfindungsgemäßen Schichten aus Aluminiumoxid können auf einem Substrat, bestehend aus Stahl oder aus Borosilikatgläsern, aufgebracht sein.

Ein weiterer Gegenstand der Erfindung ist ein Verfahren zur Herstellung der plasmagespritzten Schicht aus Aluminiumoxid, welches dadurch gekennzeichnet ist, daß man in einem an sich bekannten Plasmaspritzverfahren als Ausgangspulver ein pyrogen hergestelltes Aluminiumoxid einsetzt.

Das pyrogen hergestellte (fumed) Aluminiumoxid kann mit dem bekannten Verfahren der Flammen- oder Hochtemperaturhydrolyse, insbesondere der Flammenhydrolyse zur Herstellung von pyrogen hergestellten Oxiden, hergestellt werden (Ullmann's Enzyklopädie der techn. Chemie, 4. Auflage, Band 21, Seite 464 (1982).

Das pyrogen hergestellte Aluminiumoxid kann beispielsweise aus Aluminiumtrichlorid hergestellt werden, welches verdampft, mit trockener Luft vermischt und in einer Wasserstoff-Sauerstoff-Flamme zu Aluminiumoxid hydrolysiert wird.

Das Aluminiumoxid fällt als Aerosol an und wird durch eine Kühl- oder Koagulationsstrecke geleitet, wo das Aluminiumoxid koaguliert beziehungsweise agglomeriert und ausflockt.

Das pyrogen hergestellte Aluminiumoxid kann eine Primärteilchengröße von 13 ± 5 nm aufweisen. Es kann eine Stampfdichte von 50 ± 25 g/l aufweisen. Weiterhin kann es einen Gehalt an Aluminiumoxid von mehr als 99,6 Gew.-% aufweisen.

Als Aluminiumoxid kann beispielsweise das pyrogen hergestellte Aluminiumoxid C eingesetzt werden. Die physikalisch-chemischen Daten von Aluminiumoxid C sind in der Tabelle 1 aufgeführt.

In einer Ausführungsform der Erfindung kann man ein pyrogen hergestelltes Aluminiumoxid einsetzen, welches granuliert wurde.

Erfindungsgemäß wird als Ausgangspulver ein pyrogen hergestelltes Aluminiumoxidgranulat eingesetzt, welches hergestellt wird, indem pyrogen hergestelltes Aluminiumoxid in Wasser dispergiert und dann sprühgetrocknet wird.

Dieses Produkt ist bekannt aus WO 03/014021. Es ist ein Granulat auf der Basis von pyrogen hergestelltem Aluminiumoxid mit einem mittleren Teilchendurchmesser von 5,0 bis 150 µm und einer Stampfdichte von 300 bis 1.200 g/l.

Dieses Aluminiumoxidgranulat wird unter dem Namen AEROPERL® Alu 100/30 von der Degussa AG hergestellt.

**Tabelle 1**

| | | **Aluminiumoxid C** |
|---|---|---|
| Verhalten gegenüber Wasser | | hydrophil |
| Oberfläche nach BET¹⁾ | m²/g | 100 ± 15 |
| Mittlere Größe der Primärteilchen | nm | 13 |
| Stampfdichte ca. Wert ²⁾ verdichtete Ware | g/l | ca. 50 |
| Spezifisches Gewicht ¹⁰⁾ | g/ml | ca. 3,2 |
| Trocknungsverlust³⁾ bei Verlassen des Lieferwerkes (2 Stunden bei 105°C) | % | < 5,0 |
| Glühverlust⁴⁾⁷⁾ (2 Stunden bei 1000°C)% | | < 3 |
| pH-Wert ⁵⁾ | | 4,5-5,5 |
| SiO₂ ⁸⁾ | | < 0,1 |
| Al₂O₃⁸⁾ | | < 99,6 |
| Fe₂O₃ ⁸⁾ | | < 0,2 |
| TiO₂ ⁸⁾ | | > 0,1 |
| HCI ^{8) 9)} | | < 0,5 |
| Siebrückstand ⁶⁾ (nach Mocker, 45 µm) | % | < 0,05 |

| | | |
|---|---|---|
| ¹) nach DIN 66131 ²) nach DIN ISO 787/XI, JIS K 5101/18 (nicht gesiebt) ³) nach DIN ISO 787/II, ASTM D 280, JIS K 5101/21 ⁴) nach DIN 55921, ASTM D 1208, JIS K 5101/23 ⁵) nach DIN ISO 787/IX;ASTM D !"=(; JIS K 5101/24 ⁶) nach DIN ISO 787/XVIII; JIS K 5101/20 ⁷) bezogen auf die 2 Stunden bei 105°C getrocknete Substanz ⁸) bezogen auf die 2 Stunden bei 1000°C geglühte Substanz ⁹) HCI-Gehalt ist Bestandteil des Glühverlustes | | |

Das Plasmaspritzverfahren ist bekannt aus S. Jiansirisomboon et al. Journal of European Ceramic Society 23 (2003), 961-976.

Das Plasmaspritzen gehört zu den thermischen Spritzverfahren.

Bei dem atmosphärischen Plasmaspritzen (APS) wird mit Hilfe eines Gleichstromes zwischen einer was-sergekühlten Anode und einer wassergekühlten Kathode ein Plasma aus einem Gas (Primärgas) erzeugt. Bei diesem Gas handelt es sich um zum Beispiel Stickstoff oder Formiergas. Je nach Art des Gases können unterschiedliche Temperaturen in der Plasmaflamme erzeugt werden. Bei dieser Art des Plasmas (thermisches Plasma) wird die hohe Temperatur (einige 10000 K) dadurch erhalten, daß die dissoziierten Ionen im Plasma rekombinieren.

Zusätzlich zu der hohen Temperatur des Plasmas treten sehr hohe Gasaustrittsgeschwindigkeiten aus der Plasmapistole auf. Diese können im Bereich von einigen 100 m/s liegen. Dadurch treffen die Partikel, die in der Flamme aufgeschmolzen werden, mit hoher Geschwindigkeit auf das Substrat auf. Dabei wird ein Teil der Auftreffenergie in Wärme umgewandelt.

Die Gasgeschwindigkeit kann durch Einleiten eines zusätzlichen Gases (Sekundärgas) variiert und erhöht werden.

Durch die hohen Flammtemperaturen und die hohen Gasgeschwindigkeiten können hochschmelzende Materialien, wie zum Beispiel Al₂O₃, verarbeitet werden.

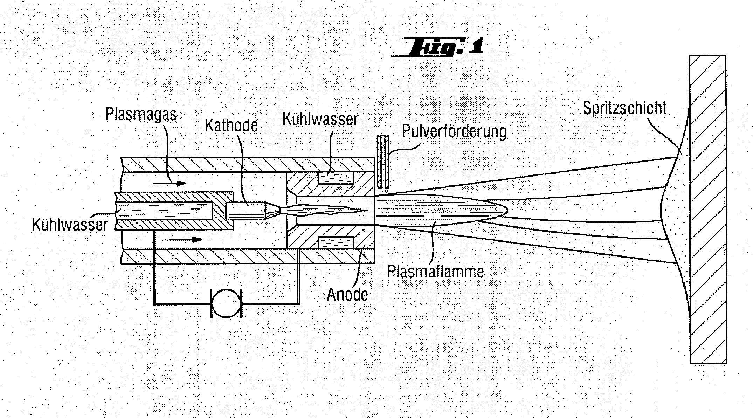

Das Ausgangspulver wird mit Hilfe eines Gasstromes entweder axial oder radial direkt in die Plasmaflamme eingegeben. Das Schema des Verfahrens ist in Figur 1 dargestellt. Folgende Parameter können beim atmosphärischen Flammenspritzen variiert werden, wodurch die Eigenschaften der Schichten vorgegeben werden: Elektrische Leistung (Flammtemperatur), Primärgasfluß (Flammtemperatur, Gasaustrittsgeschwindigkeit), Sekundärgasfluß (Gasaustrittsgeschwindigkeit), Pulverförderrate (Schichtauftragsrate), Abstand Substrat - Plasmapistole (Verweilzeit der Partikel in der Flamme).

Die Schichtdicken der plasmagespritzten Schichten können im Bereich von einigen µm bis einigen cm liegen.

Je nach Art der gespritzten Schicht und der Anwendung kommen unterschiedliche Substratwerkstoffe in Frage. Meist dient die plasmagespritzte Schicht dazu, eine Eigenschaftsverbesserung des Substratmaterials hervorzurufen.

So kann durch die erfindungsgemäßen Al₂O₃-Schicht die Verschleißbeständigkeit, die thermische Isolation oder die Korrosionsbeständigkeit verbessert werden. Es kommen sowohl Metalle (z.B. Stähle), Keramiken (z.B. Al₂O₃ oder ZrO₂) als auch Gläser (z.B. Borosilikatglas) als Substrate in Frage.

Die linearen Ausdehnungskoeffizienten der Substrate und der Schichten sollten aufeinander abgestimmt sein, um ein Abplatzen der Schicht zu verhindern. Bei stark unterschiedlichen Ausdehnungskoeffizienten kann mit Zwischenschichten (z.B. Ni-Cr-Al) gearbeitet werden, deren Ausdehnungskoeffizienten zwischen denen der Substrate und den eigentlichen funktionalen Schichten liegen.

Bei den erfindungsgemäßen Al₂O₃-Schichten kann auf Basis von Aluminiumoxidgranulat vorteilhafterweise zum Beispiel mit Ni-Cr-Al als Zwischenschicht gearbeitet werden, wenn Stahl als Substrat verwendet wird.

Die erfindungsgemäße Herstellung von plasmagespritzten Al₂O₃-Schichten unter Verwendung von Aluminiumoxidgranulat hat den Vorteil, daß die Schichten gleichzeitig beim Aufbringen gesintert werden.

Wegen der kurzen Sinterzeit ist die Korngröße der Partikel nur leicht gestiegen. Die AEROXIDE® Alu C-Partikel weisen eine Partikelgröße von ca. 13 nm auf.

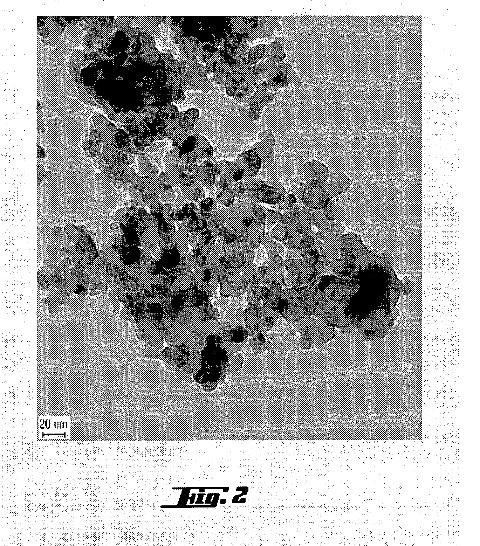

Die Partikel in der erfindungsgemäßen plasmagespritzten Schicht weisen - wie der TEM-Aufnahme gemäß Figur 2 entnommen werden kann - eine Partikelgröße von 20 ~ 30 nm auf.

Das Plasmaspritzen wurde mit einer Leistung von 35 kw und einem Abstand Substrat-Pistole von 13 cm durchgeführt .

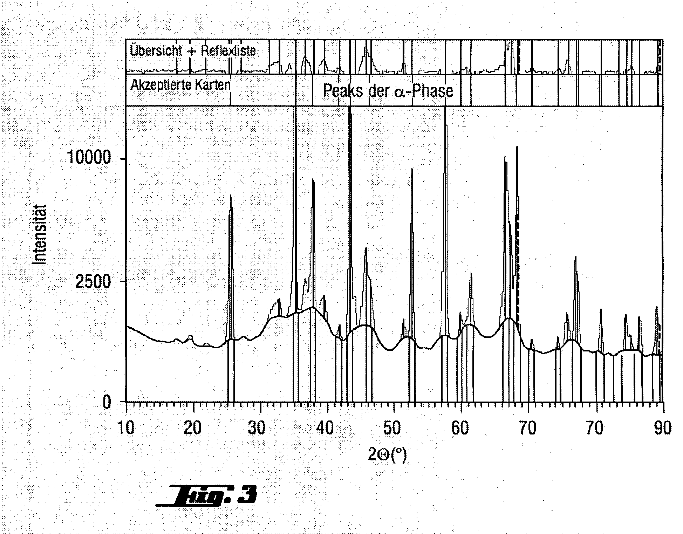

Die erfindungsgemäß nach dem Plasma-Verfahren hergestellten Schichten zeigen hauptsächlich die erwünschte α-Phase (Figur 3).

Bei der bekannten Sintermethode (Sintern im Ofen) braucht man eine längere Sinterzeit, und die Partikel wachsen sehr stark bis zu einer Partikelgröße von einigen Hundert Nanometern.

Die erfindungsgemäßen plasmagespritzten Schichten aus Aluminiumoxid können im Bereich des Verschleiß- oder Korrosionsschutzes, zum Beispiel bei Bauteilen für Schiffe oder Flugzeuge angewandt werden. Durch den Einsatz der erfindungsgemäßen plasmagespritzten Schichten mit nanoskaligem Gefüge können die Eigenschaften dieser Schichten so gestaltet werden, daß eine höhere Verschleiß- und Korrosionsbeständigkeit gegeben ist. Grundlage hierfür ist die Minimierung der Defekte, wie Risse und Poren, innerhalb der Schicht.

Das erfindungsgemäße Verfahren weist zudem den Vorteil auf, daß insbesondere die Förderanlagen auf Grund der vorteilhaften Rieselfähigkeitseigenschaften des eingesetzten Aluminiumoxidgranulates nicht verstopfen.

### Beispiele

Die Spritzversuche wurden mit AEROPERL® Alu 100/30, einem Granulat auf Basis von pyrogen hergestelltem Aluminiumoxid (Herstellung Degussa AG) mit APS (Metco F4), durchgeführt.

Das AEROPERL® Alu 100/30 weist die folgenden physikalisch-chemischen Kenndaten auf:

| | Einheiten | Richtwerte |
|---|---|---|
| Spezifische Oberfläche (BET) | m²/g | 85 - 115 |
| pH-Wert | | 4,0 - 6,0 |
| Trocknungsverlust | % | < = 2,5 |
| Stampfdichte (ca.-Wert) in Anl. n DIN ISO 787/CI, Aug. 1983 | g/l | 500 |
| Glühverlust 2h bei 1000°C, bezogen auf die getrocknete Substanz (2 h bei 105°C) | % | < = 4,5 |
| Al₂O₃-Gehalt (1) | % | > = 99,6 |
| (1) bezogen auf die geglühte Substanz | | |
| Cilas d50 | µm | 30 |

Mit dem Pulver wurden Spritzversuche auf Stahlronden (ST37, 110 mm Ø) durchgeführt. Mit Hilfe einer Maske wurden Schichten im Bereich 100 - 160 µm gespritzt (100 mm Ø).

Die Auftragsleistung lag je nach Spritzparameter im Bereich bei ca. 22 - 33 %.

Die Pulverförderraten liegen auf Grund der geringen Dichte des Materials bei ca. 2.8 - 3.2 g/min (Degussa Al₂O₃). Das geförderte Pulvervolumen war vergleichbar mit gebrochenen Qualitäten.

Die den Proben zugeordneten Spritzparameter sind in der Tabelle 2 aufgeführt. Es wurden insgesamt nur vier Ronden gespritzt.

**Tabelle 2**

| Probe | Argon (l/min) | H2 (l/min) | Strom (A) | Fördergas AR (l/min) | Fördermenge (gr/min) | Schichtstärke (µm) | Auftragsleistung (%) |
|---|---|---|---|---|---|---|---|
| Degussa 3 | 40 | 5 | 650 | 5 | ca. 2,8 | ~ 160 | ca. 33 |
| Degussa 4 | 40 | 12 | 650 | 5 | ca. 2,8 | ~ 160 | ca. 33 |
| Degussa 5 | 40 | 8 | 650 | 10 | ca. 3,2 | ~ 130 | ca. 25 |
| Degussa 6 | 50 | 8 | 650 | 5 | ca. 2,8 | ~ 130 | ca. 28 |

Von den APS gespritzten Schichten wurden elektrische Durchschlagtests durchgeführt. Die Durchschlagsfähigkeiten liegen im Bereich normaler plasmagespritzten Aluminiumoxidschichten. Die Ereignisse sind in der Tabelle 3 aufgeführt.

**Tabelle 3: Messwerte der Durchschlagfestigkeit der APS gespritzten Proben. Es sind auch die Ableitströme für 500 V (DC) angegeben.**

| Proben- Nr. | Schichtdicke | Ableitstrom (µA) | | | Durchschlagspannung [kV] | Mittelwert (Ableitstrom bzw. Durchschlagspannung) | Mess-position |
|---|---|---|---|---|---|---|---|
| | | Spannung | Anfang | Ende | | | |
| 1 | 118 | 500 V | 293 | 51 | | | 1 |
| | | 500 V | 268 | 49 | | | 2 |
| | | 500 V | 234 | 47 | | 49 | 3 |
| | | | | | 1,2 | | 4 |
| | | | | | 1,1 | | 5 |
| | | | | | 1,1 | 1,13 | 6 |
| 2 | 158 | 500 V | 369 | 53 | | | 1 |
| | | 500 V | 315 | 57 | | | 2 |
| | | 500 V | 236 | 55 | | 55 | 3 |
| | | | | | 1,6 | | 4 |
| | | | | | 1,7 | | 5 |
| | | | | | 1,5 | | 6 |
| 3 | 121 | 500 V | 161 | 42 | | 39 | 1 |
| | | 500 V | 163 | 38 | | | 2 |
| | | 500 V | 168 | 38 | | | 3 |
| | | | | | 1,2 | | 4 |
| | | | | | 1,3 | | 5 |
| | | | | | 1,2 | | 6 |
| 4 | 108 | 500 V | 426 | 124 | | | 1 |
| | | 500 V | 435 | 113 | | | 2 |
| | | 500 V | 398 | 119 | | 119 | 3 |
| | | | | | 1,2 | | 4 |
| | | | | | 1,2 | | 5 |
| | | | | | 1,1 | 1,17 | 6 |

## Patentansprüche

1. Verfahren zur Herstellung einer plasmagespritzten Schicht aus Aluminiumoxid auf einem Substrat, worin die Partikel des Aluminiumoxides in der Schicht eine Größe von 20 bis 30 nm (Nanometer) aufweisen und überwiegend in der α-Al₂O₃-Phase vorliegen, **dadurch gekennzeichnet, dass** man als Ausgangspulver ein pyrogen hergestelltes Aluminiumoxid mit einem mittleren Teilchendurchmesser von 5,0 bis 150 µm und einer Stampfdichte von 300 bis 1.200 g/l einsetzt, welches hergestellt wird, indem pyrogen hergestelltes Aluminiumoxid in Wasser dispergiert und dann sprühgetrocknet wird.

## Claims

1. Process for producing a plasma-sprayed layer of aluminium oxide on a substrate, wherein the particles of the aluminium oxide in the layer have a size of from 20 to 30 nm (nanometres) and are predominantly in the α-Al₂O₃-phase, **characterized in that** the starting powder used is a pyrogenically produced aluminium oxide with a mean particle diameter of from 5.0 to 150 µm and a tapped density of from 300 to 1200 g/l, which is produced by dispersing pyrogenically produced aluminium oxide in water and then spray-drying it.

## Revendications

1. Procédé pour la production d'une couche d'oxyde d'aluminium déposée par projection plasma sur un substrat, dans lequel les particules de l'oxyde d'aluminium présentent dans la couche une taille de 20 à 30 nm (nanomètres) et se trouvent essentiellement en la phase α-Al₂O₃, **caractérisé en ce qu'**on utilise comme poudre de départ un oxyde d'aluminium produit par pyrogénation, ayant un diamètre moyen de particule de 5,0 à 150 µm et une densité apparente de 300 à 1200 g/l, qui est préparé par dispersion dans l'eau d'oxyde d'aluminium produit par pyrogénation et ensuite séchage par atomisation.
